# EUROPÄISCHE PATENTSCHRIFT

(11) **EP 2 732 247 B1**
(45) Veröffentlichungstag und Bekanntmachung des Hinweises auf die Patenterteilung: **25.11.2015**
(21) Anmeldenummer: 11745484.3
(22) Anmeldetag: 13.07.2011
(51) Int. Cl.: G01D 11/24

(54) **SENSOR UND VERFAHREN ZU DESSEN HERSTELLUNG**
SENSOR AND METHOD FOR PRODUCING SAME
CAPTEUR ET SON PROCÉDÉ DE FABRICATION

(43) Veröffentlichungstag der Anmeldung: 21.05.2014
(73) Patentinhaber: Pepperl + Fuchs GmbH, 68307 Mannheim (DE)
(72) Erfinder: BERG, Eckard, 67269 Grünstadt (DE)
(74) Vertreter: Vonnemann, Gerhard
(86) Internationale Anmeldenummer: PCT/EP2011/003498
(87) Internationale Veröffentlichungsnummer: WO 2013/007271

(56) Entgegenhaltungen:
- EP-A1- 1 378 754
- EP-A2- 0 677 726
- DE-T3- 68 909 894

## Beschreibung

### Technisches Gebiet:

Die Erfindung betrifft einen Sensor, bestehend aus einem Gehäuse mit einem Innenraum zur wenigstens teilweisen Aufnahme und/oder Umschließung von elektronischen und/oder elektromechanischen Baugruppen und/oder von Anzeigeelementen, welches aus einem metallischen Werkstoff, zum Beispiel Stahl, besteht, wobei das Gehäuse mindestens eine Öffnung zum Herausführen wenigstens eines Anschlusses der elektronischen und/oder elektromechanischen Baugruppen und/oder der Anzeigeelemente aufweist, gemäß dem Oberbegriff des Anspruchs 1. Ebenso betrifft die Erfindung ein Verfahren zur Herstellung eines derartigen Sensors.

### Stand der Technik:

Es ist bekannt, dass Elastomere oder Elaste auf Metallteile aufvulkanisiert werden können. Dabei werden die Metallteile mit einem Haftvermittler beschichtet, zum Beispiel getaucht oder besprüht, und anschließend in eine Vulkanisierform eingelegt, in welche die Komponenten des Elastomers eingepresst werden. Unter dem Einfluss von Druck und erhöhter Temperatur entsteht so ein Verbundbauteil. Diese Technologie findet Anwendung zum Beispiel bei elastischen Lagerbuchsen, oder Dämpfungsgliedern zur Isolation von mechanischen Schwingungen, zum Beispiel in der Automobilindustrie sowie von Verbundbauteile zur Dämpfung von Schallwellen. Dabei kommen eine Vielzahl von Werkstoffen in unterschiedlichen Härten (Shore) zur Anwendung, wie zum Beispiel Nitril-Butadien (NBR) oder Silikon (VMQ).

In EP 1 378 754 A1 ist ein Rotationserfassungssensor zum Erfassen einer Änderung in einem Magnetfeld, die durch die Rotation eines zu erfassenden Gegenstands verursacht wird. Der Sensor umfasst ein abgedecktes röhrenförmiges Gehäuse sowie eine Erfassungseinheit, die in dem Gehäuse angeordnet ist. Das Gehäuse weist ferner eine Öffnung zum Herausführen eines Anschlusses der Erfassungseinheit auf, wobei zur Abdichtung der Öffnung umlaufend ein Dichtring aus einem Elastomer vorgesehen ist.

Des Weiteren ist in EP 0 677 726 A2 ein Drucksensor zum Messen des Druckes von flüssigen oder gasförmigen Medien beschrieben, welcher eine mit einer Flüssigkeit gefüllte Messzelle aufweist, die aus einem, ein Sensorelement enthaltenden mit einer Membran verschlossenen Gehäuse besteht, wobei die Membran mit einer Diffusionssperrschicht versehen ist.

Bei Sensoren oder anderen elektronischen oder elektromechanischen Bauteilen, welche in einer Umgebung mit hohem Feuchtigkeitsanteil, zum Beispiel hoher Luftfeuchtigkeit, eingesetzt werden sollen, liegt oft die Forderung vor, dass Anschlusselemente dicht aus einem Sensorgehäuse herausgeführt werden müssen. Bei dem vielfach üblichen Einsatz von klassischen Dichtelementen, wie O-Ring, Formdichtung oder dergleichen, liegen diese gewöhnlich an zwei Dichtflächen an, nämlich einerseits an einem Anschlusselement, zum Beispiel ein Kabelmantel, und andererseits an einer zum Anschlusselement hin gerichteten Fläche einer Gehäuseöffnung des Sensorgehäuses, durch welche das Anschlusselement herausgeführt wird. Diese Dichtelemente bewirken somit zu zwei Elementen hin die Abdichtung eines zwischen Anschlusselement und Gehäuseöffnung liegenden Spaltes. Jede Dichtstelle eines Gehäuses stellt allerdings ein potentielles Risiko beim Einsatz eines derartigen Sensors dar, insbesondere wenn dieser unter extremen Umweltbedingungen, wie aggressive Gase, Feuchtigkeit oder erhöhte Temperatur, eingesetzt wird.

Darüber hinaus besitzen elektronische oder elektromechanische Baugruppen oft Anzeigeelemente, zum Beispiel Leuchtdioden, welche von außen des die elektronischen oder elektromechanischen Baugruppen aufnehmenden Gehäuses des Sensors sichtbar sein sollen, ohne die Dichtigkeit des Gerätes bzw. des Gehäuses zu beeinträchtigen. Insbesondere bei der Verwendung metallischer Werkstoffe für das Gehäuse ergibt sich hier zwangsläufig eine weitere Gehäuseöffnung, die dicht verschlossen sein muss.

### Technische Aufgabe:

Der Erfindung liegt die Aufgabe zugrunde, einen Sensor der genannten Gattung dergestalt weiter zu entwickeln, bei welchem die Anzahl der Dichtstellen so weit wie möglich minimiert ist und auf die vorgenannten klassischen Dichtelemente verzichtet werden kann.

### Offenbarung der Erfindung sowie deren Vorteile:

Die Aufgabe wird bei einem Sensor der eingangs genannten Gattung dadurch gelöst, dass der Werkstoff des Gehäuses ein solcher ist, welcher mit einem Elastomer vulkanisierbar ist, wobei auf die Oberflächen des Innenraumes des Gehäuses des Sensors, wenigstens teilweise, ein Innenkörper aus einem vulkanisierfähigen Elastomer in Form wenigstens einer Schicht aufvulkanisiert ist, welche die Innenflächen der Öffnung umlaufend vollständig bedeckt und die Abdichtung der Öffnung des Gehäuses gegenüber dem Anschluss zu bewerkstelligen imstande ist, wobei die zum Anschluss hin gerichtete Geometrie des auf/in das Gehäuse aufvulkanisierten Elastomers direkt als Formdichtung gegenüber dem Anschluss ausgebildet ist.

Der erfindungsgemäße Sensor zeichnet sich vorteilhaft dadurch aus, dass auf die klassischen Dichtelemente, wie O-Ringe oder eingelegte Formdichtungen, verzichtet werden kann, wobei bei diesem Sensor die Anzahl der spezifisch notwendigen Dichtstellen auf ein Minimum beschränkt werden kann. Insbesondere kann in vielen Fällen die Anzahl der notwendigen Dichtstellen auf eine einzige reduziert werden, indem die zum Anschluss bzw. den Anschlüssen hin gerichtete Geometrie des auf- oder in das Gehäuse einvulkanisierten Elastomers direkt als Formdichtung ausgebildet wird.

In weiterer Ausgestaltung der Erfindung weist das Gehäuse des Sensors an seinem Umfang zusätzliche Durchbrechungen und/oder Hinterschneidungen innerhalb des Innenraumes auf, in welche das Elastomer nach der Vulkanisation unter Ausfüllen der Durchbrechungen und/oder Hinterschneidungen einvulkanisiert ist. Auf diese Weise wird eine noch festere und stabilere Verbindung zwischen dem Gehäuse und dem Elastomer erreicht.

In einer weiteren Ausgestaltung der Erfindung weist das Gehäuse an seiner für die Herausführung des Anschlusses der elektronischen und/oder elektromechanischen Baugruppen und/oder der Anzeigeelemente vorgesehene Öffnung Hinterschneidungen innerhalb der Wandung des Innenraumes auf, welche durch das Elastomer nach der Vulkanisation ausgefüllt sind, wodurch vorteilhaft eine zusätzliche Verankerung des Elastomers gegeben ist.

In einer weiteren Ausgestaltung des Sensors weist das innerhalb des Innenraumes des Sensors aufvulkanisierte Elastomer im Bereich der Öffnung des Gehäuses mindestens eine umlaufende Dichtlippe zur formdichten Umschließung der Anschlüsse auf.

In weiterer Ausgestaltung des Sensors ist das Elastomer zu einer Dichtkappe geformt, welche teilweise in den Innenraum durch die Öffnung ragt, wobei das Gehäuse im Bereich der Öffnung Hinterschneidungen und/oder Durchbrüche aufweist, in die das Elastomer eingefügt ist und das von der Öffnung weg weisende Ende der Dichtkappe der formdichten Umschließung des Anschlusses dient.

Das innerhalb des Sensors befindliche Elastomer kann ein vulkanisiertes Silikon mit einer Shore-Härte beispielsweise zwischen 40 bis 60 sein ebenso wie das verwendete Elastomer ein transparentes Elastomer, vorzugsweise Silikon, sein kann. Eine solche Ausgestaltung mit einem Elastomer ermöglicht vorteilhaft sowohl die Funktion der Abdichtung gegenüber der Durchführung zu übernehmen und gleichzeitig auch die Funktion einer Scheibe. Dadurch kann das emittierte Licht von Leuchtdioden, die beispielsweise den Schaltzustand des Sensors anzeigen, durch die vorgesehenen Öffnungen nach außen dringen und wahrgenommen werden. Zusätzliche Teile wie Scheiben und Dichtungen werden nicht benötigt.

In weiterer Ausgestaltung des Sensors kann in eine Durchbrechung des Gehäuses in das Elastomer ein von außen betätigbarer Taster oder Schalter einvulkanisiert sein oder unter dem einvulkanisierten Elastomer angeordnet sein, welcher mit den elektronischen und/oder elektromechanischen Baugruppen und/oder Anzeigeelementen in Wirkverbindung steht. In vorteilhafter Weise wird dadurch die Anzahl der abzudichtenden Öffnungen des Gehäuses nicht erhöht.

Vorzugsweise sind die verwendeten Gehäuse zylindrisch oder rotationssymmetrisch gestaltet.

Die Aufgabe wird des Weiteren gelöst durch ein Verfahren zur Herstellung eines Sensors, unter Verwendung eines aus einem Gehäuse mit einem Innenraum zur wenigstens teilweisen Aufnahme und/oder Umschließung von elektronischen und/oder elektromechanischen Baugruppen und/oder von Anzeigeelementen, welches aus einem metallischen Werkstoff, zum Beispiel Stahl, besteht, wobei das Gehäuse mindestens eine Öffnung zum Herausführen wenigstens eines Anschlusses der elektronischen und/oder elektromechanischen Baugruppen und/oder der Anzeigeelemente aufweist, gekennzeichnet durch die folgenden Merkmale: Einlegen des Gehäuses in eine entsprechend der Außenkontur desselben geformte Aufnahmeform, Ausbilden eines Kerns im Sinne einer Patrize dahingehend, dass der Kern eine zum Anschluss hin gerichtete Geometrie eines anschließend auf das Gehäuse aufvulkanisierten Elastomers direkt als Formdichtung gegenüber dem Anschluss aufweist, Einführen dieses Kerns in den Innenraum des Gehäuses unter Abstandshalterung zur Wandung des Innenraumes entsprechend einer gewünschten Schicht aus dem Elastomer, Einspritzen des Elastomers zwischen Wandung des Innenraumes des Gehäuses und Kern sowie Ausvulkanisieren des Elastomers und Entnahme des Gehäuses aus der Aufnahmeform sowie Entnahme des Kerns aus dem Innenraum des Gehäuses.

Durch das Verfahren der gezielt vorgegebenen Aufvulkanisation eines Elastomers direkt auf die Innen- und wenigstens teilweise auf die Außenwand eines Gehäuses eines Sensors wird in vorteilhafter Weise eine isolierende und dichtende Auskleidung des Gehäuses erzielt. Insbesondere können durch das erfindungsgemäße Verfahren kleine bis sehr kleine Sensor-Gehäuse hergestellt werden, beispielsweise bei zylindrischer Formgebung derselben mit einer Länge von weniger als 10 mm und einem Durchmesser von wenigen Millimetern.

Kurzbezeichnung der Zeichnung, in der zeigen:
- Fig. 1 a-c: ein Beispiel eines erfindungsgemäßen Sensors mit einem metallischen Gehäuse, in einem Längsschnitt mit einem Innenkörper aus einem vulkanisierfähigen Elastomer in Form wenigstens einer Elastomerschicht, welche die Innenflächen zweier Öffnungen umlaufend vollständig bedeckt
- Fig. 2 a-b: das zugehörige metallische Gehäuse des Sensors gemäß Fig. 1, ebenfalls in einem Längsschnitt,
- Fig. 3 a-e: eine weiteres Beispiel eines Sensors mit einem metallischen Gehäuse, in einem Längsschnitt mit einem Innenkörper aus einem vulkanisierfähigen Elastomer in Form wenigstens einer Elastomerschicht, welche die Innenflächen zweier Öffnungen umlaufend vollständig bedeckt, wobei das Elastomer, nach außen tretend, auch die Stirnseite einer der beiden Öffnungen bedeckt,
- Fig. 4 a-b: das zugehörige metallische Gehäuse des Sensors gemäß Fig. 3, ebenfalls in einem Längsschnitt,
- Fig. 5 a-c: ein weiteres Beispiel eines erfindungsgemäßen Sensors mit einem metallischen Gehäuse, in einem Längsschnitt mit einer Dichtkappe an auf einer der beiden endseitigen Öffnungen des Sensors, wobei die Dichtkappe teilweise in den Innenraum durch die Öffnung ragt, und das von der Öffnung weg weisende Ende der Dichtkappe der formdichten Umschließung des Anschlusses dient und

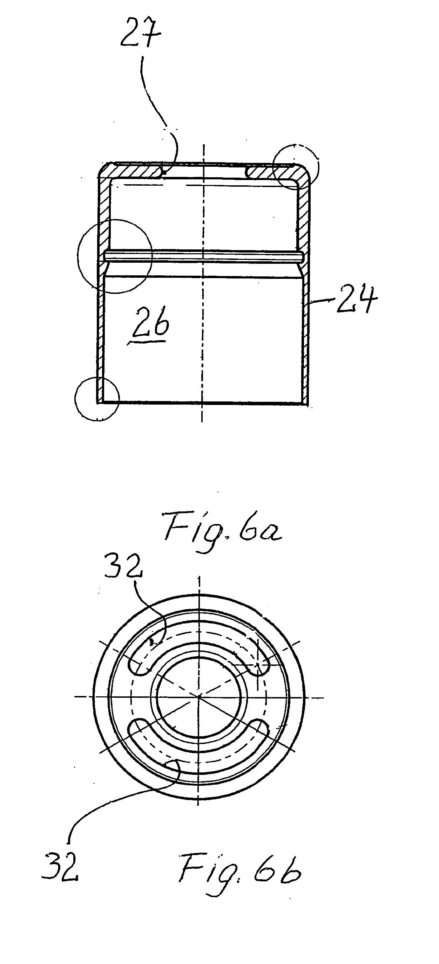

- Fig. 6 a-b: das zugehörige metallische Gehäuse des Sensors gemäß Fig. 5, ebenfalls in einem Längsschnitt.

### Wege zur Ausführung der Erfindung:

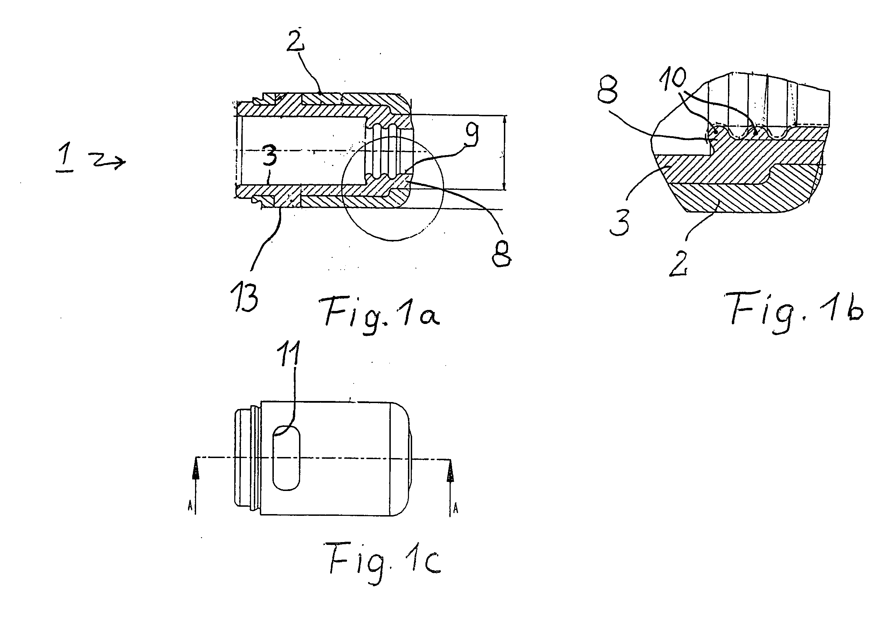

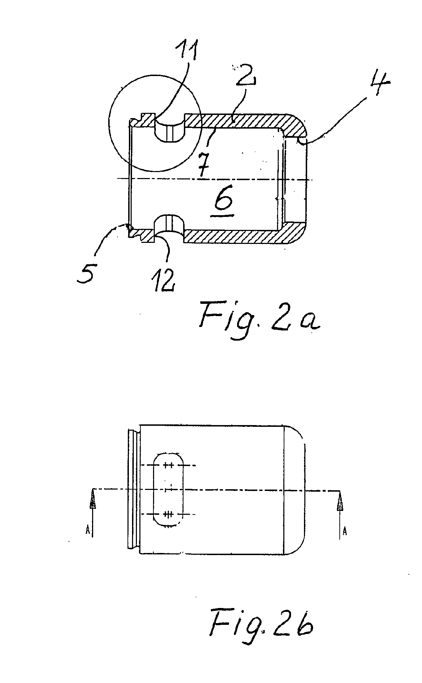

Die Figuren 1 a-c und 2 a-b zeigen, jeweils in einem Längsschnitt, ein Beispiel eines erfindungsgemäßen Sensors 1 mit einem metallischen Gehäuse 2, bevorzugt aus Edelstahl, mit einem Innenkörper 3 aus einem vulkanisierfähigen Elastomer in Form wenigstens einer Elastomerschicht. Gemäß der Figur 2a ist das Gehäuse 2 eine zylindrische Hülse mit einem Innenraum 6 und mit zwei endseitigen Öffnungen 4, 5. Die Elastomerschicht des Innenkörpers 3 bedeckt die Wandung 7 des Innenraums 6 des Gehäuses 2 und insbesondere die Innenflächen der zentrisch angeordneten Öffnungen 4, 5 in umlaufend vollständiger Weise. Die Elastomerschicht 3 im Bereich des hinteren Endes 4 des Gehäuses weist eine Verdickung 8 auf, welche rotationssymmetrisch geformt ist und deren ebenfalls zentrisch angeordnete Öffnung 9 zum Hindurchführen eines (nicht gezeigten) Anschlusses von (nicht gezeigten) elektronischen und/oder elektromechanischen Baugruppen und/oder von Anzeigeelementen dient. Dazu ist die zum Anschluss hin gerichtete Geometrie der in das Gehäuse aufvulkanisierten Elastomerschicht 3 im Bereich dieser Verdickung 8 direkt als Formdichtung gegenüber dem Anschluss ausgebildet und weist in Figur 1b beispielsweise Dichtlippen 10 auf. Das Gehäuse 2 weist des Weiteren an seinem Umfang Durchbrüche 11, 12 auf, in welche das Elastomer unter Ausbildung von Noppen 13 eingedrungen ist.

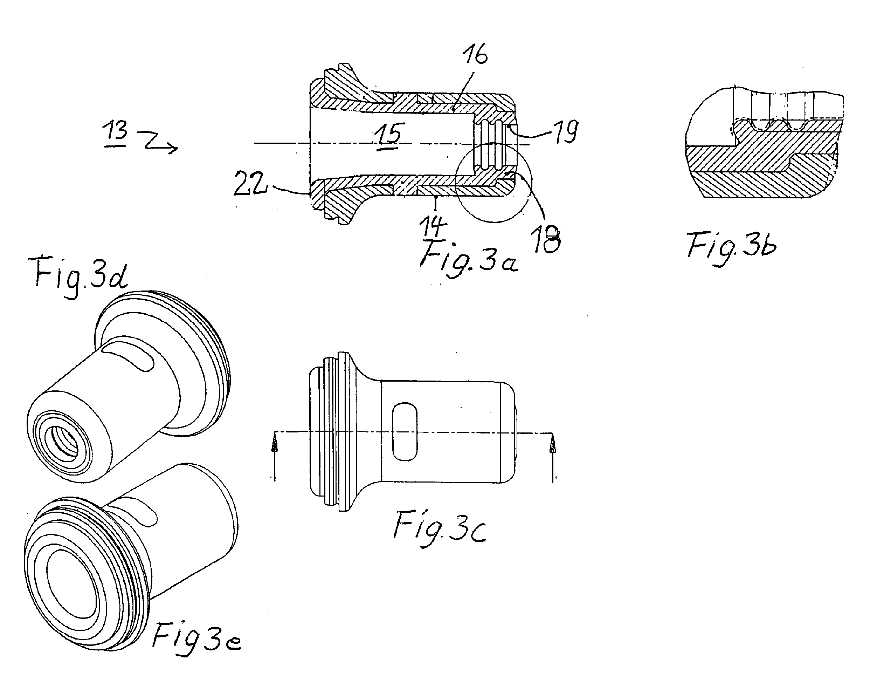

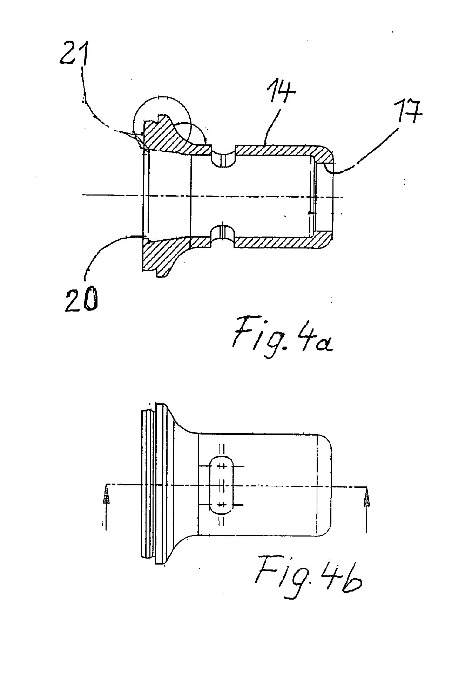

Die Figuren 3 a-e und 4 a-b zeigen in einem Längsschnitt ein weiteres Beispiel eines erfindungsgemäßen Sensors, bestehend im Wesentlichen aus einem metallischen Gehäuse 14, Figur 4 a, welches die Form einer zylindrischen Hülse aufweist, und einem auf die Wandung des Innenraums 15 des Gehäuses 14 aufvulkanisierten Elastomer in Form wenigstens einer Elastomerschicht 16. Die zum Hindurchführen eines (nicht gezeigten) Anschlusses von (nicht gezeigten) elektronischen und/oder elektromechanischen Baugruppen und/oder von Anzeigeelementen dienende, endseitige, zentrisch angeordnete Öffnung 17 des Gehäuses 14 sowie eine umlaufende Verdickung 18 der endseitigen Elastomerschicht 16, welche eine zentrische Öffnung 19 umschließen, sind höchst ähnlich geformt wie in den Figuren 1a und 1b gezeigt. Darüber hinaus besitzt das Gehäuse 14 gemäß der Figur 4a im Bereich der der Öffnung 17 gegenüber liegenden Öffnung 20 eine verbreiterte Stirnfläche 21, auf welcher ebenfalls die Elastomerschicht 16 in Form einer umlaufenden Stulpe 22 aufvulkanisiert ist. Auch die übrige Gestaltung des Gehäuses 14 mit Durchbrüchen und darin einvulkanisierten Noppen entspricht der Ausführung der Figuren 1 und 2.

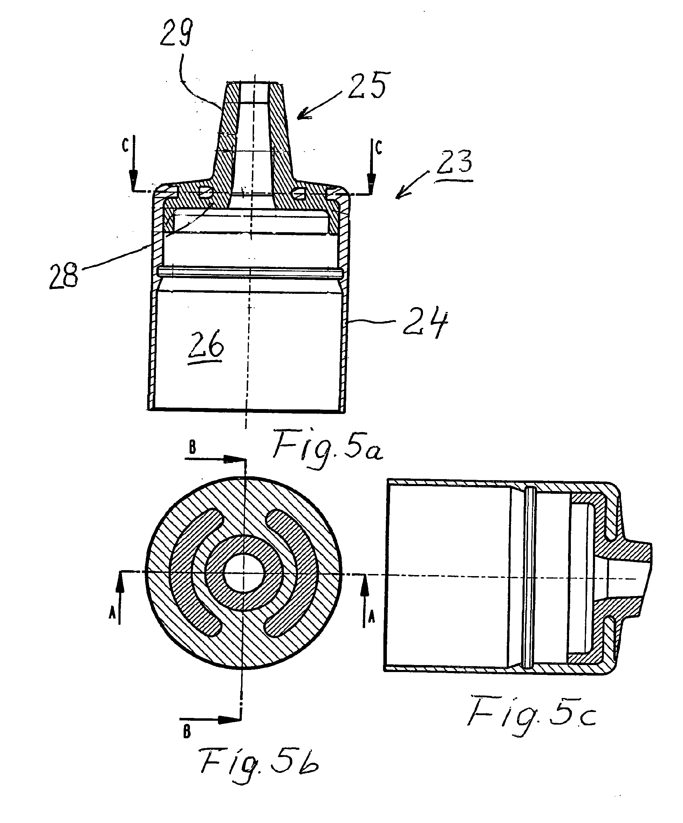

Die Figuren 5 a-c und 6 a-b zeigen in einem Längsschnitt ein weiteres Beispiel eines erfindungsgemäßen Sensors 23, bestehend aus einem metallischen, hohlzylindrischen Gehäuse 24, in dessen Innenraum 26 und in einer oberen Öffnung 27 ein Elastomer einvulkanisiert und aufvulkanisiert ist in Form einer Dichtkappe 25. Die Dichtkappe 25 besteht aus einem inneren Teil 28, welcher innerhalb des Gehäuses 24 angeordnet ist, und einem äußeren Teil 29, welcher aus dem Gehäuse 24 in Form eines Kegelstumpfes herausragt und zentrisch eine durchgehende Öffnung 30 aufweist. Die zum Hindurchführen eines (nicht gezeigten) Anschlusses von (nicht gezeigten) elektronischen und/oder elektromechanischen Baugruppen und/oder von Anzeigeelementen dienende Geometrie der direkt auf das Gehäuse 24 aufvulkanisierten Dichtkappe 25 ist direkt als Formdichtung gegenüber dem Anschluss ausgebildet. Des Weiteren weist das Gehäuse 24 in seiner die Dichtkappe 25 tragenden Stirnfläche 31 Durchbrüche 32 auf, welche vom Elastomer durchdrungen sind und so der zusätzlichen Verankerung der Dichtkappe 25 dienen.

Die verfahrensmäßige Herstellung der gezeigten Sensoren verläuft höchst ähnlich. In eine vorbereitete Form mit einer Formgebung, welche der Außenkontur des Gehäuses entspricht, wird dasselbe eingelegt. In den Innenraum des Gehäuses wird ein Kern eingeführt, welcher im Sinne einer Patrize dahingehend ausgebildet ist, dass der Kern eine zum Anschluss hin gerichtete Geometrie eines anschließend auf das Gehäuse aufvulkanisierten Elastomers direkt als Formdichtung gegenüber dem Anschluss aufweist. Dieser dergestaltete Kern wird in den Innenraum des Gehäuses unter Abstandshatterung zur Wandung des Innenraumes entsprechend einer gewünschten Schichtdicke des Elastomers eingeführt. Anschließend wird das Elastomer zwischen Wandung des Innenraumes des Gehäuses und des Kerns eingespritzt und das Elastomer ausvulkanisiert. Danach wird das vulkanisierte Gehäuse der Form entnommen wie auch der Kern aus dem Innenraum des Gehäuses entnommen wird. In den Innenraum des Gehäuses wird anschließend wenigstens eine elektronische und/oder elektromechanischen Baugruppe und/oder ein Anzeigeelement eingeführt, wobei dessen Anschluss durch die dafür vorgesehene Öffnung innerhalb der Elastomerschicht bzw. der Öffnung innerhalb einer elastomeren Dichtkappe hindurchgeführt wird. Die zum Anschluss hin gerichtete Geometrie des auf/in das Gehäuse aufvulkanisierten Elastomers ist direkt als Formdichtung gegenüber dem Anschluss ausgebildet.

### Liste der Bezugszeichen:

- 1, 13, 23: Sensor
- 2, 14, 24: metallisches Gehäuse
- 3, 16: Innenkörper aus einer Elastomerschicht
- 4, 5, 17, 20, 27: endseitige Öffnungen des Gehäuses
- 6, 15, 26: Innenraum des Gehäuses
- 7: Wandung des Innenraums
- 8, 18: endseitige Verdickung der Elastomerschicht
- 9, 19: Öffnung der Elastomerschicht
- 10: Dichtlippen
- 11, 12, 32: Durchbrüche
- 21: verbreiterte Stirnfläche des Gehäuses 14
- 22: Stulpe
- 25: Dichtkappe
- 28: inneres Teil der Dichtkappe
- 29: äußeres Teil der Dichtkappe
- 30: Durchgangsöffnung innerhalb der Dichtkappe
- 31: Stirnfläche des Gehäuses 24

## Patentansprüche

1. Sensor (1,13,23), bestehend aus einem Gehäuse (2,14,24) mit einem Innenraum (6,15,26) zur wenigstens teilweisen Aufnahme und/oder Umschließung von elektronischen und/oder elektromechanischen Baugruppen und/oder von Anzeigeelementen, welches aus einem metallischen Werkstoff, zum Beispiel Stahl, besteht, wobei das Gehäuse (2,14,24) mindestens eine Öffnung (4,5,17, 20,27) zum Herausführen wenigstens eines Anschlusses der elektronischen und/oder elektromechanischen Baugruppen und/oder der Anzeigeelemente aufweist, **dadurch gekennzeichnet,**
**dass** der Werkstoff des Gehäuses (2,14,24) ein solcher ist, welcher mit einem Elastomer vulkanisierbar ist, wobei auf die Oberflächen des Innenraumes (6,15,26) des Gehäuses (2,14,24), wenigstens teilweise, ein Innenkörper (3,16) aus einem vulkanisierfähigen Elastomer in Form wenigstens einer Schicht aufvulkanisiert ist, welche die Innenflächen der Öffnung umlaufend vollständig bedeckt und die Abdichtung der Öffnung des Gehäuses (2,14,24) gegenüber dem Anschluss zu bewerkstelligen imstande ist, wobei die zum Anschluss hin gerichtete Geometrie des auf/in das Gehäuse (2,14,24) aufvulkanisierten Elastomers direkt als Formdichtung gegenüber dem Anschluss ausgebildet ist.

2. Sensor nach Anspruch 1, **dadurch gekennzeichnet,**
**dass** das Gehäuse (2,14,24) des Sensors an seinem Umfang zusätzliche Durchbrechungen (11,12,32) und/oder Hinterschneidungen innerhalb des Innenraumes (6,15,26) aufweist, in welche das Elastomer nach der Vulkanisation unter Ausfüllen der Durchbrechungen (11,12,32) und/oder Hinterschneidungen einvulkanisiert ist.

3. Sensor nach Anspruch 1 oder 2, **dadurch gekennzeichnet,**
**dass** das Gehäuse (2,14,24) an seiner für die Herausführung des Anschlusses der elektronischen und/oder elektromechanischen Baugruppen und/oder der Anzeigeelemente vorgesehene Öffnung (4,17,27) Hinterschneidungen innerhalb der Wandung des Innenraumes (6,15,26) aufweist, welche durch das Elastomer nach der Vulkanisation ausgefüllt sind.

4. Sensor nach einem der vorherigen Ansprüche, **dadurch gekennzeichnet,**
**dass** der innerhalb des Innenraumes (6,15,26) des Gehäuses (2,14,24) aufvulkanisierte Elastomer im Bereich der Öffnung (9,19) des Gehäuses (2,14,24) mindestens eine umlaufende Dichtlippe (10) zur formdichten Umschließung der Anschlüsse aufweist.

5. Sensor nach einem der vorherigen Ansprüche, **dadurch gekennzeichnet,**
**dass** das Elastomer zu einer Dichtkappe (25) geformt ist, welche teilweise in den Innenraum durch die Öffnung (27) ragt und dort zu einem inneren Teil (28) geformt ist, wobei das Gehäuse (2,14,24) im Bereich der Öffnung (27) Hinterschneidungen und/oder Durchbrüche (32) aufweist, in die das Elastomer eingefügt ist und ein von der Öffnung (27) weg weisender, äußerer Teil (29) der Dichtkappe (25) der formdichten Umschließung des Anschlusses dient.

6. Sensor nach einem der vorherigen Ansprüche, **dadurch gekennzeichnet,**
**dass** das innerhalb des Sensors befindliche Elastomer ein vulkanisiertes Silikon mit einer Shore-Härte beispielsweise zwischen 40 bis 60 ist.

7. Sensor nach einem der vorherigen Ansprüche, **dadurch gekennzeichnet,**
**dass** als Elastomer ein transparentes Elastomer, vorzugsweise ein Silikon, verwendet wird.

8. Sensor nach einem der vorherigen Ansprüche, **dadurch gekennzeichnet,**
**dass** in eine Durchbrechung des Gehäuses (2,14,24) ein von außen betätigbarer Taster in das Elastomer einvulkanisiert oder unter diesem angeordnet ist, welcher mit den elektronischen und/oder elektromechanischen Baugruppen und/oder Anzeigeelementen in Wirkverbindung steht.

9. Sensor nach einem der vorherigen Ansprüche, **dadurch gekennzeichnet,**
**dass** die verwendeten Gehäuse zylindrisch oder rotationssymmetrisch gestaltet sind und/oder das Gehäuse des Sensors wenigstens eine Durchbrechung aufweist, wobei in das Aaufvulkanisierte Elastomer im Bereich der Durchbrechung ein von außen betätigbarer Taster oder Schalter einvulkanisiert oder unter diesem angeordnet ist, welcher mit den elektronischen und/oder elektromechanischen Baugruppen und/oder Anzeigeelementen in Wirkverbindung steht.

10. Verfahren zur Herstellung eines Sensors, unter Verwendung eines aus einem Gehäuse mit einem Innenraum zur wenigstens teilweisen Aufnahme und/oder Umschließung von elektronischen und/oder elektromechanischen Baugruppen und/oder von Anzeigeelementen, welches aus einem metallischen Werkstoff, zum Beispiel Stahl, besteht, wobei das Gehäuse mindestens eine Öffnung zum Herausführen wenigstens eines Anschlusses der elektronischen und/oder elektromechanischen Baugruppen und/oder der Anzeigeelemente aufweist, **gekennzeichnet durch** die folgenden Merkmale
- Einlegen des Gehäuses in eine entsprechend der Außenkontur desselben geformte Aufnahmeform
- Ausbilden eines Kerns im Sinne einer Patrize dahingehend, dass der Kern eine zum Anschluss hin gerichtete Geometrie eines anschließend auf das Gehäuse aufvulkanisierten Elastomers direkt als Formdichtung gegenüber dem Anschluss aufweist
- Einführen dieses Kerns in den Innenraum des Gehäuses unter Abstandshalterung zur Wandung des Innenraumes entsprechend einer gewünschten Schicht aus dem Elastomer
- Einspritzen des Elastomers zwischen Wandung des Innenraumes des Gehäuses und Kern
- Ausvulkanisieren des Elastomers und Entnahme des Gehäuses aus der Aufnahmeform sowie Entnahme des Kerns aus dem Innenraum des Gehäuses.

## Claims

1. Sensor (1, 13, 23), comprised of a housing (2, 14, 24) with an interior chamber (6, 15, 26) for at least partially receiving and/or encompassing electronic and/or electromechanical componentry and/or display elements, which housing is comprised of a metal material, for example steel, wherein the housing (2, 14, 24) includes at least one opening (4, 5, 17, 20, 27) for leading out at least one terminal of the electronic and/or electromechanical componentry and/or display elements, **characterized in that**
The material of the housing (2, 14, 24) is one that is vulcanizable with an elastomer, wherein onto the surfaces of the interior chamber (6,15, 26) of the housing (2, 14, 24), at least partially, an interior body (3, 16) of a vulcanizing capable elastomer is vulcanized in the form of at least one layer which all-around covers completely the inner faces of the opening and is capable of sealing the opening of the housing (2, 14, 24) with respect to the terminal, with the geometry directed toward the terminal of the elastomer vulcanized onto/into the housing (2, 14, 24) being directly developed as a form sealing with respect to the terminal.

2. Sensor as in claim 1, **characterized in that**
the housing (2, 14, 24) of the sensor includes at its circumference additional through-holes (11, 12, 32) and/or undercuts within the interior chamber (6, 15, 26) into which, after the vulcanization, the elastomer is vulcanized filling the through-holes (11, 12, 32) and/or undercuts.

3. Sensor as in claim 1 or 2, **characterized in that**
at its opening (4, 17, 27), provided for leading out the terminal of the electronic and/or electromechanical componentry and/or display elements, the housing (2, 14, 24) comprises undercuts within the wall of the interior chamber (6, 15, 26) that are filled by the elastomer after the vulcanization.

4. Sensor as in one of the preceding claims, **characterized in that**
the elastomer vulcanized internally onto the interior chamber (6, 15, 26) of the housing (2, 14, 24) comprises in the proximity of the opening (9, 19) of the housing (2, 14, 24) at least one circumferential sealing lip (10) for the form-tight encompassment of the terminals.

5. Sensor as in one of the preceding claims, **characterized in that**
the elastomer is formed into a sealing cap (25) which partially projects into the interior chamber through the opening (27) and here is formed into an interior portion (28) [of the sealing cap (25)], with the housing (2, 14, 24) comprising in the proximity of the opening (27) undercuts and/or through-holes (32) into which the elastomer is inserted, and an exterior portion (29) of the sealing cap (25), directed away from the opening (27), serves for the form-tight encompassment of the terminal.

6. Sensor as in one of the preceding claims, **characterized in that**
the elastomer located within the sensor is a vulcanized silicon having a Shore hardness of, for example, between 40 to 60.

7. Sensor as in one of the preceding claims, **characterized in that**
a transparent elastomer, preferably a silicon, is utilized as the elastomer.

8. Sensor as in one of the preceding claims, **characterized in that**
into a through-hole of the housing (2, 14, 24) an externally actuatable sensing device is vulcanized into the elastomer or disposed underneath it, which [sensing device] is operationally connected with the electronic and/or electromechanical componentry and/or display elements.

9. Sensor as in one of the preceding claims, **characterized in that**
the housings utilized are of a cylindrical or rotationally symmetric form and/or the housing of the sensor comprises at least one through-hole, wherein into the elastomer, that had previously been vulcanized on, in the proximity of the through-hole a sensing device or a switch, actuatable from the outside, is vulcanized or is disposed underneath it, which is operationally connected with the electronic and/or electromechanical componentry and/or display elements.

10. Method for the production of a sensor using a [of a :sic] housing with an interior chamber for at least partially receiving and/or encompassing electronic and/or electromechanical componentry and/or display elements, which [housing] is comprised of a metal material, for example steel, wherein the housing comprises at least one opening for leading out at least one terminal of the electronic and/or electromechanical componentry and/or of the display elements, **characterized by** the following features:
- placing the housing into a receiving mold formed corresponding to the outer contour of the housing
- developing a core in the sense of a male mold to the extent that the core has a geometry directed toward the terminal of an elastomer subsequently vulcanized onto the housing directly as a form seal with respect to the terminal
- introducing this core into the interior chamber of the housing maintaining a spacing from the wall of the interior chamber that corresponds to a desired layer of the elastomer
- injecting the elastomer between the wall of the interior chamber of the housing and the core
- fully curing the elastomer and removing the housing from the receiving mold as well as removing the core from the interior chamber of the housing.

## Revendications

1. Capteur (1, 13, 23) comprenant un boîtier (2,14,24) avec un espace intérieur (6,15,26) recevant et/ou entourant au moins en partie des sous-ensembles électroniques et/ou électromécaniques et/ou des éléments d'affichage et consistant en un matériau métallique, par exemple acier, ledit boîtier (2,14,24) présentant au moins une ouverture (4,5,17,20,27) pour la sortie d'au moins un raccord des sous-ensembles électroniques et/ou électromécaniques et/ou des éléments d'affichage, **caractérisé en ce que** le matériau du boîtier (2,14,24) est un matériau qui peut être vulcanisé avec un élastomère, les surfaces de l'espace intérieur (6,15,26) du boîtier (2,14,24) recevant au moins en partie un corps intérieur (3,16) en élastomère vulcanisable qui est vulcanisé sur lesdites surfaces en au moins une couche recouvrant complètement les faces intérieures de l'ouverture sur tout leur pourtour et pouvant assurer l'étanchéité de l'ouverture du boîtier (2,14,24) par rapport au raccord, l'élastomère vulcanisé sur/dans le boîtier (2,14,24) ayant une géométrie qui, au niveau du raccord, assure directement l'étanchéité par rapport à ce dernier.

2. Capteur selon la revendication 1,
**caractérisé en ce que**
le boîtier (2,14,24) du capteur présente à sa périphérie des perforations (11,12,32) et/ou des contre-dépouilles supplémentaires à l'intérieur de l'espace intérieur, dans lesquelles, après la vulcanisation, l'élastomère est vulcanisé en remplissant les perforations (11,12,32) et/ou les contre-dépouilles.

3. Capteur selon la revendication 1 ou 2,
**caractérisé en ce que**
le boîtier (2,14,24), au niveau de son ouverture (4,17,27) prévue pour la sortie du raccord des sous-ensembles électroniques et/ou électromécaniques et/ou des éléments d'affichage, présente des contre-dépouilles dans la paroi de l'espace intérieur (6,15,26) qui, après la vulcanisation, sont remplies par l'élastomère.,

4. Capteur selon l'une des revendications précédentes,
**caractérisé en ce que**
l'élastomère vulcanisé à l'intérieur de l'espace intérieur (6,15,26) du boîtier (2,14,24) présente dans la zone de l'ouverture (6,19) du boîtier (2,14,24) au moins une lèvre d'étanchéité périphérique (10) qui, de par sa forme, entoure les raccords de façon étanche.

5. Capteur selon l'une des revendications précédentes,
**caractérisé en ce que**
l'élastomère présente la forme d'un capuchon d'étanchéité (25) qui, en partie, fait saillie dans l'espace intérieur à travers l'ouverture (27), où il forme une partie intérieure (28), le boîtier (2,14,24) présentant dans la zone de l'ouverture (27) des contre-dépouilles et/ou des perforations (32), dans lesquelles est inséré l'élastomère, et une partie extérieure (29) du capuchon d'étanchéité (25) dirigée vers l'extérieur enfermant le raccord de façon étanche.

6. Capteur selon l'une des revendications précédentes,
**caractérisé en ce que**
l'élastomère disposé à l'intérieur du capteur est un silicone vulcanisé avec une dureté Shore comprise par exemple entre 40 et 60.

7. Capteur selon l'une des revendications précédentes,
**caractérisé en ce que**
l'élastomère utilisé est un élastomère transparent, de préférence un silicone.

8. Capteur selon l'une des revendications précédentes,
**caractérisé en ce que,**
dans une perforation du boîtier (2,14,24), une touche actionnable de l'extérieur est vulcanisée dans l'élastomère ou disposée au-dessous de celui-ci, laquelle touche étant en liaison active avec les sous-ensembles électroniques et/ou électromécaniques et/ou les éléments d'affichage.

9. Capteur selon l'une des revendications précédentes,
**caractérisé en ce que**
les boîtiers utilisés sont cylindriques ou à symétrie de révolution et/ou le boîtier du capteur présente au moins une perforation, une touche ou un commutateur actionnable de l'extérieur étant vulcanisé dans l'élastomère vulcanisé dans la zone de la perforation ou étant disposé au-dessous de celui-ci, ladite touche ou ledit commutateur étant en liaison active avec les sous-ensembles électroniques et/ou électromécaniques et/ou les éléments d'affichage.

10. Procédé de fabrication d'un capteur en utilisant un boîtier avec un espace intérieur recevant et/ou entourant au moins partiellement des sous-ensembles électroniques et/ou électromécaniques et/ou des éléments d'affichage et consistant en un matériau métallique, par exemple acier, ledit boîtier présentant au moins une ouverture pour la sortie d'au moins un raccord des sous-ensembles électroniques et/ou électromécaniques et/ou des éléments d'affichage,
**caractérisé par** les caractéristiques suivantes
- insertion du boîtier dans un moule récepteur adapté au contour extérieur du boîtier,
- formation d'un noyau faisant office de poinçon de sorte que le noyau, au niveau du raccord, présente une géométrie qui assure que l'élastomère vulcanisé ensuite sur le boîtier puisse servir directement d'élément d'étanchéité par rapport au raccord,
- introduction de ce noyau dans l'espace intérieur du boîtier en maintenant une distance par rapport à la paroi de l'espace intérieur qui correspond à une couche d'élastomère d'épaisseur désirée,
- injection de l'élastomère entre la paroi de l'espace intérieur du boîtier et le noyau,
- vulcanisation de l'élastomère et extraction du boîtier du moule récepteur ainsi que démoulage du noyau de l'espace intérieur du boîtier.
